(19) Europäisches Patentamt
European Patent Office
Office européen des brevets

(11) **EP 4 651 239 A1**

(12) **EUROPEAN PATENT APPLICATION**
published in accordance with Art. 153(4) EPC

(43) Date of publication:
**19.11.2025  Bulletin 2025/47**

(21) Application number: **24785054.8**

(22) Date of filing: **11.03.2024**

(51) International Patent Classification (IPC):
*H01M 4/62* (2006.01)      *H01M 4/134* (2010.01)
*H01M 10/0562* (2010.01)    *H01M 4/02* (2006.01)

(52) Cooperative Patent Classification (CPC):
Y02E 60/10

(86) International application number:
**PCT/KR2024/003066**

(87) International publication number:
**WO 2024/210345 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.04.2023  KR 20230045461**

(71) Applicant: **SK On Co., Ltd.**
**Seoul 03161 (KR)**

(72) Inventors:
• JEON, Min-Jae
  **Daejeon 34124 (KR)**
• CHOE, Ui-Jin
  **Daejeon 34124 (KR)**

(74) Representative: **Prüfer & Partner mbB**
**Patentanwälte · Rechtsanwälte**
**Sohnckestraße 12**
**81479 München (DE)**

(54) **COMPOSITE CATHODE FOR ALL-SOLID-STATE LITHIUM SECONDARY BATTERY, AND ALL-SOLID-STATE LITHIUM SECONDARY BATTERY INCLUDING SAME**

(57)      Provided in the present disclosure is a composite cathode for an all-solid-state lithium secondary battery, and an all-solid-state lithium secondary battery including same, the composite cathode comprising a sulfide-based solid electrolyte and a cathode binder, which comprises a nonaromatic hydrocarbon-based butadiene rubber and a fluorine-based rubber.

[FIG. 1]

<Example 3-2>  <Comparative example 3-2>
<Example 2-2>  <Comparative example 2-2>
<Example 1-2>  <Comparative example 1-2>

EP 4 651 239 A1

**Description**

Technical Field

The present disclosure relates to a composite cathode for an all-solid-state lithium secondary battery and an all-solid-state lithium secondary battery including the same.

Background Art

In recent years, as interest in environmental issues has grown, exhaust fumes discharged from vehicles using fossil fuels such as gasoline or diesel have been identified as one of the main causes of air pollution, and a lot of research is being conducted on an electric vehicle (EV) and a hybrid electric vehicle (HEV) as alternatives thereof. Together therewith, a lithium secondary battery with high discharge voltage and output stability is mainly used as a power sources for such an electric vehicle (EV) and a hybrid electric vehicle (HEV) .

Meanwhile, the existing lithium secondary battery having a liquid electrolyte therein, has the risk of fire due to leakage of the liquid electrolyte, and has a problem that the secondary battery expands due to decomposition of the electrolyte by electrode reactions. Accordingly, research and development on an all-solid-state lithium secondary battery having a solid electrolyte therein are being actively conducted recently to solve the above-described problems.

Disclosure of Invention

Technical Problem

An aspect of the present disclosure is to provide a composite cathode having improved ion conductivity of a solid electrolyte.

Another aspect of the present disclosure is to improve an initial discharge capacity of an all-solid-state lithium secondary battery.

Solution to Problem

According to an aspect of the present disclosure, provided is a composite cathode for an all-solid-state lithium secondary battery, the composite cathode for an all-solid-state lithium secondary battery including a sulfide-based solid electrolyte and a cathode binder including non-aromatic hydrocarbon-based butadiene rubber and fluorine-based rubber.

The non-aromatic hydrocarbon-based butadiene rubber may include butadiene rubber (BR).

The fluorine-based rubber may include at least one selected from the group consisting of polyvinylidene fluoride (PVDF), polyhexafluoropropylene (PHFP), and poly(vinylidene fluoride-co-hexafluoropropylene) (PVDF-HFP).

The sulfide-based solid electrolyte may be of an argyrodite type.

The cathode binder may include the non-aromatic hydrocarbon-based butadiene and the fluorine-based rubber in a weight ratio of 1:99 to 99:1.

The non-aromatic hydrocarbon-based butadiene rubber may have a weight average molecular weight of 590,000 to 720,000.

The fluorine-based rubber may have a weight average molecular weight of 100,000 to 600,000.

The composite cathode for the all-solid-state lithium secondary battery may further include a cathode conductive material, and the cathode conductive material and the cathode binder may be included in a weight ratio of 1:99 to 99:1.

The sulfide-based solid electrolyte may be of an argyrodite type, and the cathode binder may include butadiene rubber and fluorine-based rubber.

The fluorine-based rubber may include at least one selected from the group consisting of polyvinylidene fluoride, polyhexafluoropropylene, and polyvinylidene fluoride hexafluoropropylene.

The sulfide-based solid electrolyte may be of an argyrodite type, the cathode binder may include a cathode binder including non-aromatic hydrocarbon-based butadiene rubber and fluorine-based rubber, and the fluorine-based rubber may include at least one selected from the group consisting of polyvinylidene fluoride, polyhexafluoropropylene, and polyvinylidene fluoride hexafluoropropylene.

The non-aromatic hydrocarbon-based butadiene rubber may include butadiene rubber.

According to another aspect of the present disclosure, provided is an all-solid-state lithium secondary battery, the all-solid-state lithium secondary battery including: a composite cathode including a sulfide-based solid electrolyte, and a cathode binder including non-aromatic hydrocarbon-based butadiene rubber and fluorine-based rubber, and a solid electrolyte layer disposed on at least one surface of the composite cathode.

The non-aromatic hydrocarbon-based butadiene rubber may include butadiene rubber.

The fluorine-based rubber may include at least one selected from the group consisting of polyvinylidene fluoride, polyhexafluoropropylene, and polyvinylidene fluoride hexafluoropropylene.

The sulfide-based solid electrolyte may be of an argyrodite type.

A sulfide-based solid electrolyte of the solid electrolyte layer and a sulfide-based solid electrolyte of the composite cathode may be of an argyrodite type.

The all-solid-state lithium secondary battery may further include a lithium metal anode.

The all-solid-state lithium secondary battery may have an initial discharge capacity of 180 mAh/g or more.

Advantageous Effects of Invention

According to an embodiment of the present disclosure, a composite cathode for an all-solid-state lithium secondary battery may improve the phenomenon of reduced ion conductivity of the sulfide-based solid electrolyte within the composite cathode.

The composite cathode according to the present disclosure may have excellent dispersibility of a cathode active material, a sulfide-based solid electrolyte, a cathode conductive material, and a binder, and high oxidation stability thereof.

An initial discharge capacity of the all-solid-state lithium secondary battery including the composite cathode according to the present disclosure may be improved.

The composite cathode of the present disclosure may be widely applied in green technology fields such as electric vehicles, battery charging stations, solar power generation and wind power generation using batteries, and the like. In addition, the composite cathode of the present disclosure may be used in eco-friendly electric vehicles, hybrid vehicles, and the like, to prevent climate change by suppressing air pollution and greenhouse gas emissions.

Brief Description of Drawings

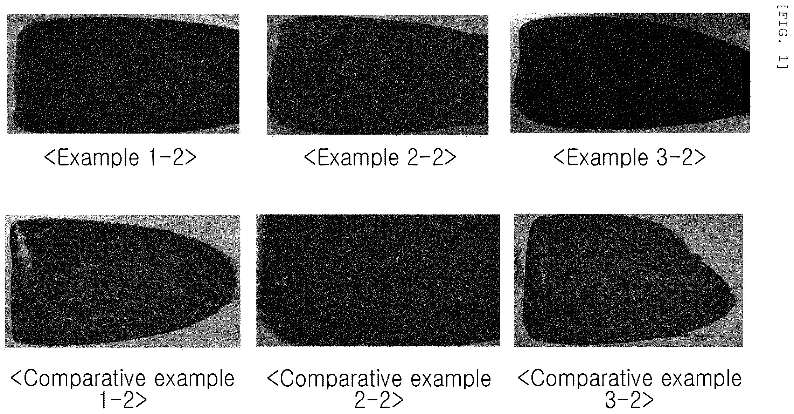

FIG. 1 illustrates images of sheets of Examples 1-2 to 3-2 and Comparative Examples 1-2 to 3-2.

Best Mode for the Invention

Hereinafter, the present disclosure will be described in more detail with reference to Examples. The following Examples are intended to illustrate an example of the present disclosure and are not intended to limit the present disclosure thereby.

Unless otherwise specifically defined herein, when a part such as a layer, film, thin film, region, plate, or the like, is disposed to be "over" or "on" another part, this may include not only cases in which it is disposed "directly over" another part, but also cases in which there is another part therebetween.

Electrodes disposed on both surfaces of a solid electrolyte layer of an all-solid-state lithium secondary battery may be in contact with and be combined with the solid electrolyte to form a composite electrode. However, in the case of a composite cathode, ion conductivity of the solid electrolyte may be reduced by a cathode binder included in the composite cathode, and agglomeration may occur between particles of the composite cathode, oxidation stability, and the like, may be deteriorated.

A composite cathode for an all-solid-state lithium secondary battery according to an embodiment may include a sulfide-based solid electrolyte and a cathode binder including non-aromatic hydrocarbon-based butadiene rubber and fluorine-based rubber as a cathode binder. A composite cathode according to an embodiment of the present disclosure may have excellent ion conductivity. In addition, the composite cathode of an embodiment according to the present disclosure may have improved dispersibility of a cathode active material, or the like, and improved oxidation stability thereof.

## **Composite cathode**

A composite cathode for an all-solid-state lithium secondary battery according to the present disclosure may include a cathode current collector and a cathode mixture layer formed on at least one surface of the cathode current collector.

The cathode mixture layer may include a cathode active material, a cathode binder, and a solid electrolyte, and may further include a cathode conductive material.

The composite cathode according to an embodiment of the present disclosure may include a sulfide-based solid electrolyte and a cathode binder including non-aromatic hydrocarbon-based butadiene rubber and fluorine-based rubber.

**Cathode active material**

The cathode active material may be suitably used in the present disclosure as long as it is a lithium transition metal oxide that can absorb and release lithium ions that can be commonly used as a cathode active material in a secondary battery, and may be, for example, an NCM-based, NCA-based, or NCMA-based lithium composite oxide, a lithium composite oxide of manganese and nickel such as $LiMn_{1.5}Ni_{0.5}O_4$, lithium titanate, lithium cobaltate, lithium nickelate, lithium manganese oxide, titanium oxide, niobium oxide, tungsten oxide, molybdenum oxide, lithium metal phosphate such as $LiMPO_4$(M=Fe, Mn, Co, Ni), $Li_3V_2(PO_4)_3$, and the like.

Specifically, the cathode active material may be $Li_aNi_xM_{1-x}O_{2+y}$ (0.9≤a≤1.2, 0.5≤x≤0.99, -0.1≤y≤0.1. M may represent one or more elements selected from Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba or Zr.), wherein, specifically, 0.95≤a≤1.08 may be, where x may be 0.6 or more, 0.8 or more, greater than 0.8, 0.9 or more, or 0.98 or more. In addition, specifically, M may include Co, Mn, or Al, and more specifically, may include Co and Mn, and may further include Al as needed.

More specifically, the cathode active material may be an NCM-based cathode active material represented by $Li_a$ $(Ni_xCo_yMn_z)O_2$(0.9≤a≤1.2, 0<x≤0.99, 0<y<0.5, 0<z<0.5, x+y+z=1), and may be an NCMA-based cathode active material further including Al, and may be an NCA-based cathode active material represented by $Li_a(Ni_xCo_yAl_z)O_2$(0.9≤a≤1.2, 0<x<0.99, 0<y<0.5, 0<z<0.5, x+y+z=1), wherein, 0.95≤a≤1.08 may be satisfied, where x may be 0.6 or more, 0.8 or more, greater than 0.8, 0.9 or more, or 0.98 or more.

In addition, the cathode active material may be LLO (Li rich layered oxides, Over Lithiated Oxides, Over-lithiated layered oxide, OLO, LLOs), represented by $Li_{1+x}M_{1-x}O_2$, wherein 0≤x≤0.4 is satisfied, where M may include at least one element among Na, Mg, Ca, Y, Ti, Zr, Hf, V, Nb, Ta, Cr, Mo, W, Ni, Mn, Co, Fe, Cu, Ag, Zn, B, Al, Ga, C, Si, Sn, Ba and Zr, and specifically may include Ni, Co, Mn or Al, and more specifically, may include Ni, Co and Mn, and may further include Al as needed.

In some exemplary embodiments, the cathode active material may further include a doping or coating on a surface thereof. For example, the doping or coating may include Al, Ti, Ba, Zr, Si, B, Mg, P, W, Na, V, Cu, Zn, Ge, Ag, Ba, Nb, Ga, Cr, Sr, Y, Mo, or an alloy thereof or an oxide thereof, which may be used alone or in a combination of two or more thereof. By the doping or coating, the cathode active material may be passivated, so that the penetration stability and lifespan may be further improved.

For example, the lithium transition metal oxide may have the form of primary particles or may have the form of secondary particles formed by densely packed primary particles.

In addition, the lithium transition metal oxide may have the form of secondary particles formed by assembling or agglomerating a plurality of primary particles to form a substantially single particle, or may have the form of a single particle. The single particle form may mean, for example, excluding secondary particles formed by assembling or agglomerating a plurality of primary particles (for example, more than 10) to form a substantially single particle. However, the single particle form does not exclude that 2 to 10 single particles are attached or adhered to each other to form a single body. In some embodiments, the cathode active material may include both a secondary particle form and a single particle form.

When the lithium transition metal oxide includes lithium transition metal oxide particles in the form of a single particle, cracks in the particles may be reduced during charging and discharging of the battery, and a BET surface area that reacts with an electrolyte may be reduced, thereby reducing a side reaction between the electrolyte and the cathode active material. Accordingly, the life characteristics of the secondary battery and a capacity retention rate during repeated charging and discharging may be further improved.

In an embodiment, the cathode active material may be about 1 to about 99 wt% based on the total weight of the cathode mixture layer.

**Cathode conductive material**

The cathode conductive material is used to provide conductivity to an electrode, and any material commonly used in a secondary battery may be used without limitation.

In exemplary embodiments, the cathode conductive material may be a conductive material including, for example, a carbon-based material such as natural graphite, artificial graphite, carbon black, acetylene black, Ketjen black, carbon fiber, or the like; a metal-based material such as metal powder or metal fiber such as copper, nickel, aluminum, silver, or the like; a conductive polymer such as a polyphenylene derivative, or the like; or a mixture thereof.

In an embodiment, the cathode conductive material may be about 0.1 to about 50 wt% based on the total weight of the cathode mixture layer.

**Solid electrolyte**

The solid electrolyte may be a sulfide-based solid electrolyte.

In exemplary embodiments, the sulfide-based solid electrolyte may include at least one selected from the group consisting of, for example, $Li_2S$-$P_2S_5$, $Li_2S$-$P_2S_5$-LiX, where X is a halogen element, $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$, where m and n are positive numbers, Z is one of Ge, Zn, or Ga, $Li_2S$-$GeS_2$, $Li_2S$-$SiS_2$-$Li_3PO_4$, $Li_2S$-$SiS_2$-$Li_pMO_q$, where p and q are positive numbers, M is one of P, Si, Ge, B, Al, Ga In, $Li_{7-x}PS_{6-x}Cl_x(0 \leq x \leq 2)$, $Li_{7-x}PS_{6-x}Br_x(0 \leq x \leq 2)$, and $Li_{7-x}PS_{6-x}I_x(0 \leq x \leq 2)$, but an embodiment thereof is not limited thereto.

In exemplary embodiments, the sulfide-based solid electrolyte may be of an argyrodite type, and the argyrodite-type sulfide-based solid electrolyte may be represented by the following chemical formula 1.

[Chemical Formula 1]     $Li^+_{12-n-x}A^{n+}X^{2-}_{6-x}Y^-_x$

In the chemical formula 1, A is P, As, Ge, Ga, Sb, Si, Sn, Al, In, Ti, V, Nb or Ta, X is S, Se or Te, Y is Cl, Br, I, F, CN, OCN, SCN or $N_3$, wherein $1 \leq n \leq 5$, and $0 \leq x \leq 2$ are satisfied.

The sulfide-based solid electrolyte may be, for example, an argyrodite-type sulfide-based solid electrolyte including at least one selected from $Li_{7-x}PS_{6-x}Cl_x(0 \leq x \leq 2)$, $Li_{7-x}PS_{6-x}Br_x(0 \leq x \leq 2)$, and $Li_{7-x}PS_{6-x}I_x(0 \leq x \leq 2)$. In an embodiment, the sulfide-based solid electrolyte may be, for example, an argyrodite-type sulfide-based solid electrolyte including at least one selected from $Li_6PS_5Cl$, $Li_6PS_5Br$, and $Li_6PS_5I$. The argyrodite-type sulfide-based solid electrolyte may have excellent hardness, so that fine differentiation of the solid electrolyte may not occur during the mixing process for electrode formation, and accordingly, additional side reactions with the solvent and binder may be suppressed, and the structural stability of the solid electrolyte may be secured.

In exemplary embodiments, a particle size of the sulfide-based solid electrolyte may be about 10 $\mu$m or less. The sulfide-based solid electrolyte may have a particle size within the above-described range, so that a composite cathode having excellent dispersibility and a uniform surface can be provided.

In an embodiment, the sulfide-based solid electrolyte may be about 1 to about 99 wt% based on the total weight of the cathode mixture layer.

**Cathode binder**

As described above, in the exemplary embodiments, the cathode binder may include non-aromatic hydrocarbon-based butadiene rubber and fluorine-based rubber.

In an embodiment, the non-aromatic hydrocarbon-based butadiene rubber may include butadiene rubber (BR).

In an embodiment, the non-aromatic hydrocarbon-based butadiene rubber may have a weight average molecular weight of about 590,000 to about 720,000. In the present disclosure, the weight average molecular weight may be measured by a light scattering method.

In an embodiment, the fluorine-based rubber may include at least one selected from the group consisting of polyvinylidene fluoride (PVDF), polyhexafluoropropylene (PHFP), and poly(vinylidene fluoride-co-hexafluoropropylene) (PVDF-HFP).

In an embodiment, the fluorine-based rubber may have a weight average molecular weight of about 100,000 to about 600,000.

When the non-aromatic hydrocarbon-based butadiene rubber has a weight average molecular weight outside of this range or the fluorine-based rubber has a weight average molecular weight outside of this range, the viscosity of the slurry used in the manufacturing of the cathode mixture layer may be increased. Due thereto, it may be difficult to control the amount of slurry during the process of applying the slurry to the cathode current collector, making it difficult to manufacture a composite cathode with a uniform thickness, and in some cases, defects may be induced in the cathode mixture layer during the process of drying the slurry to form the cathode mixture layer.

In an embodiment, the cathode binder may include the non-aromatic hydrocarbon-based butadiene and the fluorine-based rubber in a weight ratio of about 1:99 to about 99:1.

In exemplary embodiments, the cathode binder may further include at least one selected from the group consisting of polyvinyl alcohol (PVA), carboxymethyl cellulose (CMC), starch, hydroxypropylmethyl cellulose (HPMC), polyvinyl pyrrolidone, polytetrafluoroethylene (PTFE), polyethylene, polypropylene, ethylene propylene diene monomer (EPDM), and styrene-butadiene rubber (SBR).

In an embodiment, the composite cathode may include the cathode conductive material and the cathode binder in a weight ratio of about 1:99 to about 99:1. Specifically, the composite cathode may include the cathode binder and the cathode conductive material in a weight ratio of about 1:99 to about 20:80, more specifically, in a weight ratio of about 1:99 to about 10:90.

In an embodiment, the cathode binder may be about 0.1 to about 10 wt% based on the total weight of the cathode mixture layer.

Meanwhile, the sulfide-based solid electrolyte may have high ion conductivity close to ion conductivity of the liquid electrolyte. When the sulfide-based solid electrolyte is not included in the composite cathode and exists independently, the sulfide-based solid electrolyte may have high ion conductivity. However, the sulfide-based solid electrolyte may be included in the composite cathode, and mixed with a cathode binder. In this case, the ion conductivity of the sulfide-based solid electrolyte may be reduced by a nonconductive cathode binder. That is, the sulfide-based solid electrolyte included in the composite cathode may have lower ion conductivity than the sulfide-based solid electrolyte that exists independently due to the cathode binder.

In addition, the cathode binder can cause the cathode active material, sulfide-based solid electrolyte, and cathode conductive material to clump together within the composite cathode.

In addition, the cathode binder may have high chemical stability with the sulfide-based solid electrolyte and low oxidation stability within the composite cathode.

However, the composite cathode according to an embodiment of the present disclosure includes the cathode binder including the non-aromatic hydrocarbon-based butadiene rubber and the fluorine-based rubber, and the cathode binder may have high chemical stability with the sulfide-based solid electrolyte. In addition, the cathode binder may improve the phenomenon of reduced ion conductivity of the sulfide-based solid electrolyte within the composite cathode, increase dispersibility, and have high oxidation stability.

**Cathode current collector**

The components of the cathode current collector are not particularly limited, and a plate or foil formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof may be used.

An all-solid-state lithium secondary battery according to the present disclosure may include the composite cathode described above and a solid electrolyte layer disposed on at least one surface of the composite cathode.

**Anode**

The anode may include an anode current collector and an anode mixture layer formed on at least one surface of the anode current collector.

The components of the anode current collector are not particularly limited, and a plate or foil formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof may be used.

The anode mixture layer may include a carbon-based active material such as artificial graphite or natural graphite, a silicon-based active material such as silicon oxide ($SiO_x$; 0<x<2), a Si-C composite, or pure Si, and a metal such as lithium metal as an anode active material.

The anode mixture layer may further include an anode binder. The anode binder may include, for example, one or more kinds of styrene butadiene rubber (SBR), polytetrafluoroethylene, polyvinylidene fluoride, polyethylene, vinylidene fluoride/hexafluoropropylene copolymer, polyacrylonitrile, polymethyl methacrylate, and the like.

The anode mixture layer may further include an anode conductive material. The anode conductive material may include, for example, one or two or more types of graphite such as natural graphite or artificial graphite, carbon black, acetylene black, Ketjen black, channel black, furnace black, lamp black, summer black, carbon fiber, carbon nanotubes (CNTs), carbon-based materials, metal powder particles or metal fibers such as copper, nickel, aluminum, and silver, conductive whiskey such as zinc oxide or potassium titanate, conductive metal oxides such as titanium oxide, or conductive polymers such as polyphenylene derivatives thereof.

Meanwhile, the all-solid-state lithium secondary battery may not include an anode mixture layer (hereinafter, also referred to as a non-anode secondary battery). That is, the all-solid-state lithium secondary battery may be a battery in which an anode mixture layer including an anode active material is not formed on the anode current collector during the battery assembly process. When a non-anode lithium secondary battery is initially charged or first charged, a main cathode active material and a sacrificial cathode active material may be delithiated, and lithium ions generated from the cathode active material may be reduced on an anode electrode current collector to form a lithium layer of a lithium metal layer or a solid lithium layer.

In an embodiment, the all-solid-state lithium secondary battery may include a lithium metal anode.

**Solid electrolyte layer**

The solid electrolyte layer may include at least one selected from the group consisting of a polymer solid electrolyte, an oxide-based solid electrolyte, a halide-based solid electrolyte, and a sulfide-based solid electrolyte.

In an embodiment, the solid electrolyte layer may include a sulfide-based solid electrolyte, wherein the sulfide-based solid electrolyte may be as described above.

In an embodiment, when the solid electrolyte layer includes a sulfide-based solid electrolyte, the sulfide-based solid electrolyte may be the same as or different from the sulfide-based solid electrolyte of the composite cathode, and for example, may be the same as each other.

In an embodiment, the sulfide-based solid electrolyte of the solid electrolyte layer and the sulfide-based solid electrolyte of the composite cathode may be of an argyrodite type.

As an embodiment of the present disclosure, as the non-aromatic hydrocarbon-based butadiene rubber and the fluorine-based rubber are included in the composite cathode as the cathode binder, the phenomenon of reduced ion conductivity of the sulfide-based solid electrolyte within the composite cathode may be improved, dispersibility may be increased, and high oxidation stability may be achieved. Due thereto, the initial discharge capacity of the all-solid-state lithium secondary battery may be improved.

In an embodiment, the all-solid-state lithium secondary battery may have an initial discharge capacity of about 180 mAh/g or more.

Mode for the Invention

Hereinafter, the present disclosure will be described in more detail with reference to Examples. The following Examples are intended to illustrate an example of the present disclosure and are not intended to limit the present disclosure thereby.

**Examples 1 to 3 and Comparative Examples 1 to 3**

Composite cathodes of Examples 1 to 3 and Comparative Examples 1 to 3 include NCM622 (Li(Ni$_{0.6}$Co$_{0.2}$Mn$_{0.2}$)O$_2$) as a cathode active material, carbon black Super P from Timcal Co. as a cathode conductive material, and Li$_6$PS$_5$Cl as a solid electrolyte.

In addition, the composite cathodes of Examples 1 to 3 and Comparative Examples 1 to 3 include cathode binders having the types and weight ratios shown in Table 1 below.

[Table 1]

|  | Cathode binder | |
| --- | --- | --- |
|  | Type | Weight ratio |
| Example 1 | PVdF-HFP, BR | 1:3 |
| Example 2 | PVdF-HFP, BR | 1:1 |
| Example 3 | PVdF-HFP, BR | 3:1 |
| Comparative Example 1 | PVdF-HFP | - |
| Comparative Example 2 | BR | - |
| Comparative Example 3 | PVdF-HFP, SBR | 3:1 |

**Ion conductivity reduction rate evaluation**

Three zirconia balls having a diameter of 5 mm were inserted into a 35 ml thinky mixer container, and a sulfide-based solid electrolyte and a cathode binder were added to the thinky mixer container with a weight ratio of 97:3 along with a solvent, and were then stirred at a speed of 2000 rpm for 3 minutes using a thinky mixer to prepare a slurry.

Thereafter, the slurry was coated on an Al foil and manufactured in the form of a sheet. The slurry in the form of a sheet was dried at a temperature of 80°C for 24 hours under a vacuum atmosphere, to produce a sulfide-based solid electrolyte-cathode electrode binder sheet.

In this case, an ester-based organic solvent was used as the solvent.

Thus, sulfide-based solid electrolyte-cathode binder sheets of Examples 1-1 to 3-1 and Comparative Examples 1-1 to 3-1, respectively including the cathode binders of Examples 1 to 3 and Comparative Examples 1 to 3, were manufactured, respectively.

Thereafter, a dry sulfide-based solid electrolyte powder was prepared. Thereafter, ion conductivity of the sulfide-based solid electrolyte powder and the sulfide-based solid electrolyte-cathode binder sheets of Examples 1-1 to 3-1 and Comparative Examples 1-1 to 3-1 were measured, respectively.

In detail, 0.1 g of the sulfide-based solid electrolyte powder was inserted into a 10 mm mold, and then pressed at a pressure of 350 MPa to measure ion conductivity. Thereafter, the sulfide-based solid electrolyte-cathode binder sheets of Examples 1-1 to 3-1 and Comparative Examples 1-1 to 3-1 were cut into 10 mm pieces, inserted into a 10 mm mold, and then pressed at a pressure of 350 MPa to measure the ion conductivity, respectively.

Ion conductivity was measured using a potentiostat from Biologic, and conditions for measuring ion conductivity were 10 mV from a start frequency of 7 MHz to an end frequency of 100 Hz.

The ion conductivity of each of the sulfide-based solid electrolyte powder particles and the sulfide-based solid electrolyte-cathode binder sheets of Examples 1-1 to 3-1 and Comparative Examples 1-1 to 3-1 was measured three times to minimize deviation thereof, and the ion conductivity measurements were conducted in a glove box under an argon (Ar) atmosphere.

Thereafter, an ion conductivity reduction rate of each sulfide-based solid electrolyte included in the sulfide-based solid electrolyte-cathode binder sheets of Examples 1-1 to 3-1 and Comparative Examples 1-1 to 3-1 was calculated and evaluated according to Equation 1 below.

[Equation 1]

$$\text{Ion conductivity reduction rate (\%)} = \frac{A-B}{A} \times 100$$

where A is an ion conductivity measurement value of a sulfide-based solid electrolyte powder, and B is an ion conductivity measurement value of sulfide-based solid electrolyte-cathode binder sheets of Examples 1-1 to 3-1 and Comparative Examples 1-1 to 3-1.

If the ion conductivity reduction rate was less than 70%, it was evaluated as excellent, and if the ion conductivity reduction rate was 70% or more, it was evaluated as poor.

The results of evaluating the ion conductivity reduction rate of sulfide-based solid electrolytes are shown in Table 2 below.

[Table 2]

|  | Example 1-1 | Example 2-1 | Example 3-1 | Comparative Example 1-1 | Comparative Example 2-1 | Comparative Example 3-1 |
|---|---|---|---|---|---|---|
| Ion conductivity reduction rate(%) | Excellent | Excellent | Excellent | Excellen t | Poor | Poor |

**Dispersibility Evaluation**

Three zirconia balls having a diameter of 5 mm were inserted into a 35 ml thinky mixer container, a cathode conductive material and a cathode binder were added to the thinky mixer container with a weight ratio of 3:7 along with a solvent, and then stirred at a speed of 1500 rpm for 5 minutes using the thinky mixer to prepare a slurry.

In this case, Super P from Timcal Co. was used as the cathode conductive material, an ester-based organic solvent was used as the solvent, and cathode binders of Examples 1 to 3 and Comparative Examples 1 to 3 in Table 1 were used as the cathode binder, respectively.

Thereafter, the slurry was applied to Al foil to be manufactured in the form of a sheet, and then dried at a temperature of 120 °C for 24 hours in a vacuum atmosphere to prepare sheets of Examples 1-2 to 3-2 and Comparative Examples 1-2 to 3-2, respectively including the cathode binders of Examples 1-3 and Comparative Examples 1 to 3, respectively.

Thereafter, a degree to which the sheets of Examples 1-2 to 3-2 and Comparative Examples 1-2 to 3-2 were uniformly applied on the Al foil was observed with the naked eye, and the dispersibility of the sheets of Examples 1-2 to 3-2 and Comparative Examples 1-2 to 3-2 was evaluated as high/medium/low, respectively, according to the following criteria.

High: No clumping of a conductive material, good slurry coating property
Medium: Partial clumping of a conductive material is observed, but good slurry coating property
Low: A lot of clumping of a conductive material, and poor slurry coating property

The sheets of Examples 1-2 to 3-2 and Comparative Examples 1-2 to 3-2 were photographed and shown in FIG. 1, and the results of the dispersibility evaluation are shown in Table 3 below.

[Table 3]

|  | Example 1-2 | Example 2-2 | Example 3-2 | Comparati ve Example 1-2 | Comparati ve Example 2-2 | Comparati ve Example 3-2 |
|---|---|---|---|---|---|---|
| Dispersibility | High | High | High | Low | High | Low |

**Oxidation stability evaluation**

Three zirconia balls having a diameter of 5 mm were inserted into a 35 ml thinky mixer container, and a cathode conductive material and a cathode binder were added to the thinky mixer container with a weight ratio of 3:7 along with a solvent, and then stirred at a speed of 1500 rpm for 5 minutes using a thinky mixer to prepare a slurry.

In this case, Super P from Timcal Co. was used as the cathode conductive material, an ester-based organic solvent was used as the solvent, and cathode binders of Examples 1 to 3 and Comparative Examples 1 to 3 in Table 1 were used, respectively, as the cathode binder.

Thereafter, the slurry was applied to an Al foil to manufacture a composite cathode, and the composite cathode was dried at a temperature of 120°C for 24 hours in a vacuum atmosphere.

Thereafter, a cell using lithium metal as an anode was manufactured. The cell was comprised of a composite cathode/separator/anode in the form of a coil cell, and used a liquid electrolyte. In this case, polyethylene is used as a separator, and an electrolyte solvent containing ethylene carbonate (EC) and ethyl methyl carbonate (EMC) in a weight ratio of 3:7, 1M $LiPF_6$ electrolyte salt, and 2 wt% fluoroethylene carbonate (FEC) is used as a liquid electrolyte.

Thus, cells of Examples 1-3 to 3-3 and Comparative Examples 1-3 to 3-3, respectively including the cathode binders of Examples 1 to 3 and Comparative Examples 1 to 3, were manufactured, respectively.

Thereafter, the oxidation stability evaluation was conducted up to 5 V using linear sweep voltammetry (LSV) on the cells of Examples 1-3 to 3-3 and Comparative Examples 1-3 to 3-3 using a potentiostat from Biologic Co., respectively. If the cell had oxidation stability exceeding 4V, it was evaluated as excellent, and if it had oxidation stability below 4V, it was evaluated as poor. The results of the oxidation stability evaluation of the cell are shown in Table 4 below.

[Table 4]

|  | Example 1-3 | Example 2-3 | Example 3-3 | Comparati ve Example 1-3 | Comparati ve Example 2-3 | Comparati ve Example 3-3 |
|---|---|---|---|---|---|---|
| Oxidation stability | Excellent | Excellent | Excellent | Excellent | Poor | Excellent |

**Initial discharge capacity measurement**

21 zirconia balls having a diameter of 3 mm were inserted into a 12 ml thinky mixer container, and a cathode active material, a sulfide-based solid electrolyte, a cathode conductive material, and a cathode binder were mixed with a solvent in a weight ratio of 80:17.5:1.5:1 in the thinky mixer container, and then stirred using a thinky mixer and then coated on an Al foil to produce a sheet.

In this case, NCM622($Li(Ni_{0.6}Co_{0.2}Mn_{0.2})O_2$) was used as the cathode active material, $Li_6PS_5Cl$ was used as the sulfide-based solid electrolyte, Super P was used as the cathode conductive material, an ester-based organic solvent was used as the solvent, and the cathode binders of Examples 1 to 3 and Comparative Examples 1 to 3 of Table 1 were used, respectively, as the cathode binder.

Thereafter, the sheet was dried at a temperature of 80°C for 24 hours under a vacuum atmosphere to manufacture a composite cathode.

Thereafter, an all-solid-state lithium secondary battery using a lithium-indium alloy as a cathode was manufactured. The all-solid-state lithium secondary battery is comprised of a composite cathode/solid electrolyte layer/cathode, and an argyrodite-type sulfide-based solid electrolyte was used as a solid electrolyte layer.

Specifically, an argyrodite-type sulfide-based solid electrolyte was inserted into a circular mold having a diameter of 10 mm and pressed at 350 MPa to form the solid electrolyte layer, the composite cathode was disposed on one surface of the solid electrolyte layer, and then pressed at 300 MPa, and an anode was disposed on the other surface of the solid electrolyte layer, thereby manufacturing all-solid-state lithium secondary batteries of Examples 1-4 to 3-4 and Comparative Examples 1-4 to 3-4, respectively including the cathode binders of Examples 1 to 3 and Comparative Examples 1 to 3 respectively.

Thereafter, the all-solid-state lithium secondary batteries of Examples 1-4 to 3-4 and Comparative Examples 1-4 to 3-4 were respectively inserted into a pressing cell, and the initial discharge capacity was measured respectively.

Meanwhile, a process of manufacturing an all-solid-state lithium secondary battery was performed in a glove box under an argon (Ar) atmosphere, and an initial discharge capacity was measured at room temperature (25°C) with a C-rate of 0.05C and a cut-off voltage of 1.9V-3.7. The results for the initial discharge capacity of the all-solid-state lithium secondary battery are shown in Table 5 below.

[Table 5]

|  | Example 1-4 | Example 2-4 | Example 3-4 | Comparative Example 1-4 | Comparative Example 2-4 | Comparative Example 3-4 |
|---|---|---|---|---|---|---|
| Initial discharge capacity (mAh/g) | 186 | 182 | 189 | 156 | 176 | 166 |

Referring to Tables 2 to 5 and FIG. 1, it can be confirmed that the composite cathode including the cathode binders of Examples 1 to 3 of Table 1 has excellent chemical stability with the cathode binder and the sulfide-based solid electrolyte, compared to the composite cathodes of Comparative Examples 1 to 3, has a low ion conductivity reduction rate of the sulfide-based solid electrolyte, and has excellent dispersibility with the cathode conductive material, or the like, so that the composite cathode may be uniformly applied on an Al foil to form a composite cathode.

In addition, it can be confirmed that a composite cathode using the cathode binders of Examples 1 to 3 of Table 1 may produce an all-solid-state lithium secondary battery having excellent oxidation stability and high initial discharge capacity.

Therefrom, as the composite cathode according to the present disclosure includes the cathode biner including the non-aromatic hydrocarbon-based butadiene rubber and the fluorine-based rubber, it could be confirmed that the phenomenon of reduced ion conductivity of the sulfide-based solid electrolyte within the composite cathode was improved. In addition, it could be seen that the composite cathode of the present disclosure had improved dispersibility of the cathode active material, the sulfide-based solid electrolyte, and the cathode conductive material, and the cathode binder had high oxidation stability. Furthermore, it could be seen that the all-solid-state lithium secondary battery including the composite cathode of the present disclosure had improved initial discharge capacity.

Although the embodiments of the present disclosure have been described in detail above, they are merely exemplary, and those skilled in the art will understand that various modifications and equivalent other embodiments are possible therefrom. Accordingly, the true technical protection scope of the present disclosure should be determined by the technical idea of the appended claims.

The specific implementations described in the examples are only examples and do not limit the scope of the examples in any way. In addition, unless specifically mentioned as "essential," "important," etc., an element may not be absolutely necessary for the application of the present disclosure.

The use of the term "above" and similar referential terms in the specification of the embodiments (especially in the claims) may correspond to both a singular form and a plural form. In addition, when a range is described in the embodiments, it is intended that the disclosure includes application of individual values within the range (unless otherwise stated), and is equivalent to describing each individual value that constitutes the range in the detailed description.

Finally, unless there is an explicit description of the order or the contrary description of the steps that constitute the method according to the embodiment, the operations may be performed in any suitable order. The embodiments are not necessarily limited to the order in which the operations are described. The use of all examples or exemplary terms (e.g., for example, etc.) in the embodiments is merely intended to elaborate the embodiments and is not intended to limit the scope of the embodiments due to the examples or exemplary terms, unless otherwise defined by the claims. In addition, it can be seen that those skilled in the art will recognize that various modifications, combinations, and alterations may be configured according to design conditions and factors within the scope of the appended claims or the equivalents.

**Claims**

1.   A composite cathode for an all-solid-state lithium secondary battery, comprising:

    a sulfide-based solid electrolyte; and
    a cathode binder including non-aromatic hydrocarbon-based butadiene rubber and fluorine-based rubber.

2.   The composite cathode for an all-solid-state lithium secondary battery of claim 1, wherein the non-aromatic hydrocarbon-based butadiene rubber includes butadiene rubber (BR).

3. The composite cathode for an all-solid-state lithium secondary battery of claim 1, wherein the fluorine-based rubber comprises at least one selected from the group consisting of polyvinylidene fluoride (PVDF), polyhexafluoropropylene (PHFP), and poly(vinylidene fluoride-co-hexafluoropropylene) (PVDF-HFP).

4. The composite cathode for an all-solid-state lithium secondary battery of claim 1, wherein the sulfide-based solid electrolyte is of an argyrodite type.

5. The composite cathode for an all-solid-state lithium secondary battery of claim 1, wherein the cathode binder comprises the non-aromatic hydrocarbon-based butadiene and the fluorine-based rubber in a weight ratio of 1:99 to 99:1.

6. The composite cathode for an all-solid-state lithium secondary battery of claim 1, wherein the non-aromatic hydrocarbon-based butadiene rubber has a weight average molecular weight of 590,000 to 720,000.

7. The composite cathode for an all-solid-state lithium secondary battery of claim 1, wherein the fluorine-based rubber has a weight average molecular weight of 100,000 to 600,000.

8. The composite cathode for an all-solid-state lithium secondary battery of claim 1, further comprising:

   a cathode conductive material,
   wherein the cathode conductive material and the cathode binder are included in a weight ratio of 1:99 to 99:1.

9.

   The composite cathode for an all-solid-state lithium secondary battery of claim 1, wherein the sulfide-based solid electrolyte is of an argyrodite type, and
   the cathode binder includes butadiene rubber and fluorine-based rubber.

10. The composite cathode for an all-solid-state lithium secondary battery of claim 9, wherein the fluorine-based rubber comprises at least one selected from the group consisting of polyvinylidene fluoride, polyhexafluoropropylene, and polyvinylidene fluoride hexafluoropropylene.

11. The composite cathode for an all-solid-state lithium secondary battery of claim 9, wherein the non-aromatic hydrocarbon-based butadiene rubber comprises butadiene rubber.

12. An all-solid-state lithium secondary battery, comprising:

   a composite cathode including a sulfide-based solid electrolyte, and a cathode binder including non-aromatic hydrocarbon-based butadiene rubber and fluorine-based rubber; and
   a solid electrolyte layer disposed on at least one surface of the composite cathode.

13. The all-solid-state lithium secondary battery of claim 12, wherein the non-aromatic hydrocarbon-based butadiene rubber comprises butadiene rubber.

14. The all-solid-state lithium secondary battery of claim 12, wherein the fluorine-based rubber comprises at least one selected from the group consisting of polyvinylidene fluoride, polyhexafluoropropylene, and polyvinylidene fluoride hexafluoropropylene.

15. The all-solid-state lithium secondary battery of claim 12, wherein the sulfide-based solid electrolyte is of an argyrodite type.

16. The all-solid-state lithium secondary battery of claim 12, wherein the solid electrolyte layer comprises a sulfide-based solid electrolyte.

17. The all-solid-state lithium secondary battery of claim 12, wherein a sulfide-based solid electrolyte of the solid electrolyte layer and a sulfide-based solid electrolyte of the composite cathode are of an argyrodite type.

18. The all-solid-state lithium secondary battery of claim 12, wherein the all-solid-state lithium secondary battery further includes a lithium metal anode.

19. The all-solid-state lithium secondary battery of claim 12, wherein the all-solid-state lithium secondary battery has an initial discharge capacity of 180 mAh/g or more.

[FIG. 1]

<Example 3-2>

<Example 2-2>

<Example 1-2>

<Comparative example 3-2>

<Comparative example 2-2>

<Comparative example 1-2>

## INTERNATIONAL SEARCH REPORT

| International application No. |
|---|
| **PCT/KR2024/003066** |

### A. CLASSIFICATION OF SUBJECT MATTER

**H01M 4/62**(2006.01)i; **H01M 4/134**(2010.01)i; **H01M 10/0562**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/62(2006.01); H01M 10/052(2010.01); H01M 10/0562(2010.01); H01M 10/0565(2010.01); H01M 10/0585(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고체 전해질(solid electrolyte), 부타디엔 고무(butadiene rubber, RB), 폴리비닐리덴플루오라이드(polyvinylidene fluoride, PVDF), 황화물계(sulfide), 아지로다이트(argyrodite), 이차전지 (secondary battery)

### C. DOCUMENTS CONSIDERED TO BE RELEVANT

| Category* | Citation of document, with indication, where appropriate, of the relevant passages | Relevant to claim No. |
|---|---|---|
| X | KR 10-2015-0060517 A (SAMSUNG ELECTRONICS CO., LTD.) 03 June 2015 (2015-06-03) See claims 1, 14 and 16, and paragraphs [0054], [0057], [0061], [0069], [0076], [0077], [0079] and [0086]. | 1-19 |
| A | KR 10-2022-0070615 A (HYUNDAI MOTOR COMPANY et al.) 31 May 2022 (2022-05-31) See claims 2 and 4. | 1-19 |
| A | JP 2022-108202 A (TOYOTA MOTOR CORP.) 25 July 2022 (2022-07-25) See claim 1. | 1-19 |
| A | KR 10-2022-0048298 A (SAMSUNG SDI CO., LTD.) 19 April 2022 (2022-04-19) See claims 1, 13 and 25. | 1-19 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 June 2024** | **21 June 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/003066** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2022-0042726 A (KOREA INSTITUTE OF INDUSTRIAL TECHNOLOGY) 05 April 2022 (2022-04-05)<br>See claims 1, 5 and 8. | 1-19 |

Form PCT/ISA/210 (second sheet) (July 2022)

**INTERNATIONAL SEARCH REPORT**
Information on patent family members

International application No.

**PCT/KR2024/003066**

| Patent document cited in search report | | | Publication date (day/month/year) | Patent family member(s) | | | Publication date (day/month/year) |
|---|---|---|---|---|---|---|---|
| KR | 10-2015-0060517 | A | 03 June 2015 | JP | 2015-103451 | A | 04 June 2015 |
| | | | | JP | 6262503 | B2 | 17 January 2018 |
| | | | | US | 2015-0147660 | A1 | 28 May 2015 |
| KR | 10-2022-0070615 | A | 31 May 2022 | US | 2022-0165999 | A1 | 26 May 2022 |
| JP | 2022-108202 | A | 25 July 2022 | | None | | |
| KR | 10-2022-0048298 | A | 19 April 2022 | EP | 4228047 | A1 | 16 August 2023 |
| | | | | US | 2023-0275261 | A1 | 31 August 2023 |
| | | | | WO | 2022-080628 | A1 | 21 April 2022 |
| KR | 10-2022-0042726 | A | 05 April 2022 | KR | 10-2485801 | B1 | 09 January 2023 |

Form PCT/ISA/210 (patent family annex) (July 2022)